Europäisches Patentamt

European Patent Office

Office européen des brevets

(11) Veröffentlichungsnummer: **0 269 891**
**A2**

# EUROPÄISCHE PATENTANMELDUNG

(21) Anmeldenummer: 87116169.1

(22) Anmeldetag: 03.11.87

(51) Int. Cl.4: **C08L 23/04** , C08K 5/14 , H02G 1/16

(30) Priorität: 06.11.86 DE 3637876

(43) Veröffentlichungstag der Anmeldung:
08.06.88 Patentblatt 88/23

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Lange, Gerhard, Dipl.-Chem.**
**Ursberger Strasse 13/2**
**D-8000 München 80(DE)**
Erfinder: **Weber, Günther, Dipl.-Ing. (FH)**
**Egerlandstrasse 11**
**D-8268 Garching(DE)**
Erfinder: **Diermeier, Heinz**
**Meisenweg 13**
**D-8011 Vaterstetten(DE)**

(54) Abdeckung aus Kunststoff für Korrosionsschutz von Gegenständen.

(57) Die Erfindung betrifft eine Abdeckung aus Kunststoff für Korrosionsschutz von Gegenständen, insbesondere für die Reparatur oder Abdichtung von Kunststoffumhüllungen. Sie besteht aus einem unvernetzten, bei Wärmezufuhr schmelzbaren Kunststoffcompound, dem ein organisches Peroxid zugesetzt ist.

EP 0 269 891 A2

## Abdeckung aus Kunststoff für Korrosisonsschutz von Gegenständen.

Die Erfindung betrifft eine Abdeckung aus Kunststoff für Korrosionsschutz von Gegenständen, insbesondere für die Reparatur oder Abdichtung von Kunststoffumhüllungen.

Zum Schutz gegen Umwelteinflüsse werden Metallrohre, elektrische oder optische Leiter wie auch Kabel mit schlauchförmigen Gebilden aus Kunststoff, vorzugsweise aus Polyolefin umgeben. Diese Umhüllungen unterliegen jedoch der Gefahr, daß sie durch mechanische Einwirkung beschädigt werden, so daß die Schutzwirkung zumindest partiell aufgehoben wird. Solche Beschädigungen müssen durch geeignete Maßnahmen repariert werden, um die vollwertige Funktion wieder herzustellen. Hierzu wird gewöhnlich ein Reparaturband verwendet, das aus einer einseitig mit einem Heißschmelzkleber beschichteten, vernetzten Polyolefinfolie besteht. Derartige Reparaturbänder werden zum Beispiel in der deutschen Offenlegungsschrift 22 50 096 und in der US-Patentschrift 3 033 727 ausführlich beschrieben. Die Eignung solcher im Handel befindlicher Reparaturbänder ist jedoch stark abhängig von der Güte der Verklebung mit dem entsprechenden Untergrund. In jedem Falle beruht die Verbindung auf reiner Adhäsion und ist somit stark abhängig von Temperaturschwankungen. So besteht bei hohen Temperaturen die Gefahr des Ablösens durch Erweichen des Schmelzklebers und bei tiefen Temperaturen kann es zu einer Versprödung des Klebers und damit ebenfalls zum Ablösen des Reparaturbandes oder zumindest zur Undichtigkeit führen.

So liegt nun der Erfindung die Aufgabe zugrunde, eine Abdeckung aus Kunststoff zu erstellen, mit der die vorstehend angedeuteten Gefahren behoben werden. Die gestellte Aufgabe wird nun mit einer Abdeckung aus Kunststoff der oben erwähnten Art dadurch gelöst, daß sie aus einem unvernetzten Kunststoffcompound auf Polyethylenbasis besteht, dem ein organisches Peroxid zugesetzt ist und das bei Wärmezufuhr schmelzbar ist.

Der wesentliche Unterschied und Vorteil der Abdeckung gemäß der Erfindung zu den bisher angebotenen Reparaturbändern besteht darin, daß die "Verklebung" mit einem Substrat auf Polyethylenbasis nicht durch Adhäsion mit einem entsprechenden Kleber sondern durch chemische Bindung in Form einer Vulkanisation ohne einen Kleber erfolgt. So wurde nun speziell für die Reparatur von Schläuchen und Kabelmänteln unterschiedlichster Art eine Abdeckung auf Polyethylenbasis entwickelt, wobei diese Abdeckung zum Beispiel als Flicken oder auch als Band hergestellt wird. Auf diese Weise lassen sich je nach Bedarf kleinere Reparaturstellen wie auch flächenhaft größere Abschnitte überdecken. Außerdem besitzt das Material zur Herstellung dieser erfindungsgemäßen Abdeckungen auch sehr gute Hafteigenschaften auf Aluminium-und Stahloberflächen, so daß Beschichtungen solcher Oberflächen ebenfalls mit großem Erfolg bezüglich der Haftfestigkeit durchgeführt werden können.

Die speziellen Eigenschaften zur Verbindung der erfindungsgemäßen Abdeckung mit den entsprechenden Oberflächen der abzudeckenden Gegenstände werden durch den chemischen Aufbau des Materials erreicht. So wird die Abdeckung aus einem Compound auf Polyethylenbasis hergestellt, dem ein organisches Peroxid eingearbeitet wird. Durch die entsprechende Wahl der Compoundkomponenten läßt sich die Abdeckung den mechanischen Eigenschaften der abzudeckenden Oberfläche anpassen. Diese Abdeckung wird im unvernetzten Zustand verstreckt, so daß in geringem Maße innere Spannungen aufgebaut sind.

Die zu reparierende Stelle, zum Beispiel ein Defekt in einem Polyethylen-Kabelmantel, wird nun mit der erfindungsgemäßen Abdeckung abgedeckt oder bei Ausführung als Wickelband mit diesem umwickelt. Zunächst werden zweckmäßigerweise die Enden der Abdeckung durch Wärmezufuhr, zum Beispiel mit der Flamme eines Propangasbrenners, bis zum Schmelzen erhitzt und durch leichtes Andrücken auf der Reparaturstelle fixiert. Damit erübrigt sich die bisher übliche Fixierung von handelsüblichen Abdeckungen mit Hilfe eines Klebebandes. Bei weiterer Wärmezufuhr schrumpft nun die Abdeckung aufgrund der inneren Spannungen und beginnt schließlich zu schmelzen. Ebenso erweichen die äußersten Schichten des zu reparierenden Gegenstandes, zum Beispiel ein Polyethylenmantel, und es kommt zu einer Verschmelzung der Grenzflächen. Bei weiterer Energiezufuhr zerfällt das Peroxid und bewirkt dadurch die Vernetzung der schmelzenden Abdeckung und der Grenzfläche des zu umhüllenden Gegenstandes. Eine Vulkanisation der Abdeckung mit dem Material des zu umhüllenden Gegenstandes, zum Beispiel des Polyethylenmantels hat damit stattgefunden. Die Güte dieser innigen Verbindung ist im Gegensatz zur bisher üblichen Adhäsionsbindung, zum Beispiel mit Schmelzkleber, nicht mehr temperaturabhängig.

Der Aufbau solcher erfindungsgemäßen Abdeckungen kann nun in vielen Variationen erfolgen und kann damit den Erfordernissen genau angepaßt werden. So ist zum Beispiel auch ein Mehrschichtenaufbau mit einer harten Außenschicht und einer weichen Innenschicht möglich, so daß auch Einfluß auf verschiedene Beanspruchungen der Oberfläche genommen werden kann.

Im folgenden werden einige Beispiele für die Zusammensetzung von Compoundmassen für erfindungsgemäße Abdeckungen aufgezeigt:

a) Polyethylen + Peroxid

b) Polyethylen + Ethylenvinylazetat + Peroxid

c) Polyethylen + Ethylencopolymerisat mit Acrylsäure und Acrylester + Peroxid

d) Polyethylen + Ethylencopolymerisat mit Butylacrylat + Peroxid.

Als Anhaltspunkt für die richtige Wärmezufuhr können auch entsprechende, im Handel bereits befindliche Umschlagfarben verwendet werden, die ihre Farbe dann verändern, wenn die erforderliche Wärmezufuhr erreicht ist.

**Ansprüche**

1. Abdeckung aus Kunststoff für Korrosionsschutz von Gegenständen, insbesondere für die Reparatur oder Abdichtung von Kunststofumhüllungen,
**dadurch gekennzeichnet,**
daß sie aus einem unvernetzten und bei Wärmezufuhr schmelzbaren Kunststoffcompound auf Polyethylenbasis besteht, dem ein organisches Peroxid zugesetzt ist.

2. Abdeckung nach Anspruch 1,
**dadurch gekennzeichnet,**
daß der Kunststoffcompound verstreckt ist.

3. Abdeckung nach einem der vorhergehenden Ansprüche,
**dadurch gekennzeichnet,**
daß der Kunststoffcompound mit einer auf Wärmezufuhr ansprechenden Umschlagfarbe versetzt, insbesondere beschichtet ist.

4. Abdeckung nach einem der vorhergehenden Ansprüche,
**dadurch gekennzeichnet,**
daß sie aus mehreren, übereinander liegenden Schichten unterschiedlicher Materialeigenschaften, insbesondere in der Härte, gebildet ist.

5. Abdeckung nach einem der vorhergehenden Ansprüche,
**dadurch gekennzeichnet,**
daß der Kunststoffcompound aus Polyehtylen und Peroxid besteht.

6. Abdeckung nach einem der Ansprüche 1 bis 4,
**dadurch gekennzeichnet,**
daß der Kunststoffcompound aus Polyethylen + Ethylenvinylazetat + Peroxid besteht.

7. Abdeckung nach einem der Ansprüche 1 bis 4,
**dadurch gekennzeichnet,**
daß der Kunststoffcompound aus Polyethylen + Ethylencoplolymerisat mit Acrylsäure und Acrylester + Peroxid besteht.

8. Abdeckung nach einem der Ansprüche 1 bis 4,
**dadurch gekennzeichnet,**
daß der Kunststoffcompound aus Polyethylen + Ethylencopolymerisat mit Butylacrylat + Peroxid besteht.

9. Abdeckung nach einem der vorhergehenden Ansprüche,
**dadurch gekennzeichnet,**
daß sie als Wickelband ausgebildet ist.

10. Abdeckung nach einem der vorhergehenden Ansprüche,
**dadurch gekennzeichnet,**
daß das Compoundmaterial mit seinen Eigenschaften bezüglich der Streckspannung, Streckdehnung, Reißfestigkeit, Reißdehnung oder Schälfestigkeit den entsprechenden Materialeigenschaften des zu bedeckenden Gegenstandes angepaßt ist.